# EUROPEAN PATENT APPLICATION

(11) **EP 4 607 235 A2**
(43) Date of publication of application: **27.08.2025**
(21) Application number: 25160130.8
(22) Date of filing: 26.02.2025
(51) Int. Cl.: G01S 7/41, G01S 13/86, G01S 13/931, G06V 20/58, G08G 1/04, G08G 1/056

(54) **TRAFFIC WARNING SYSTEM**

(30) Priority: 26.02.2024 US 202463557617 P
(71) Applicant: Giant Manufacturing Co., Ltd., Xitun Dist., Taichung City 407727 (TW)
(72) Inventor: LO, Chi-Wei, 407 Taichung City (TW); CHANG, Chih-Kai, 407 Taichung City (TW)
(74) Representative: Krauns, Christian

(57) **Abstract**

A traffic warning system includes a visual sensor, a radar sensor and a processor. The visual sensor is configured to detect a visual sensing data of each of at least one object. The radar sensor is configured to detect a radar sensing data of each of the at least one object. The processor is configured to obtain a radar confidence level of the radar sensing data by analyzing the radar sensing data; obtain a visual confidence level of the visual sensing data by analyzing the visual sensing data; and if the radar confidence level and the visual confidence level both are greater than a preset value, obtain a position and a speed of the at least one object by analyzing the visual sensing data and the radar sensing data.

## Description

### FIELD OF THE INVENTION

The invention relates to a traffic warning system.

### BACKGROUND OF THE INVENTION

As the number and types of vehicles increase, the probability of traffic accidents also increases year by year. Obviously, in addition to the continuous progress of transportation technology in the power management system, the improvement of safety during driving is also another topic. For example, there are many objects on the bicycle's driving route that the rider needs to pay attention to, such as traffic signs, pedestrians, obstacles, etc. The rider needs to pay attention to the road environment as a basis for the next driving action.

In today's society, traffic accidents often occur when the rider does not pay attention to the road conditions. Riders may not notice traffic signs or obstacles on the road due to fatigue or distraction, and therefore fail to perform correct driving actions according to traffic signs or obstacles in front of them.

### SUMMARY OF THE INVENTION

In an embodiment of the invention, a traffic warning system is provided. The traffic warning system includes a visual sensor, a radar sensor and a processor. The visual sensor is configured to detect a visual sensing data of each of at least one object. The radar sensor is configured to detect a radar sensing data of each of the at least one object. The processor is configured to obtain a radar confidence level of the radar sensing data by analyzing the radar sensing data; obtain a visual confidence level of the visual sensing data by analyzing the visual sensing data; and if the radar confidence level and the visual confidence level both are greater than a preset value, obtain a position and a speed of the at least one object by analyzing the visual sensing data and the radar sensing data.

In another embodiment of the invention, an operation method for a traffic warning system includes the following steps: detecting, by a visual sensor, a visual sensing data of each of at least one object; detecting, by a radar sensor, a radar sensing data of each of the at least one object; obtaining, by a processor, a radar confidence level of the radar sensing data by analyzing the radar sensing data; obtaining, by the processor, a visual confidence level of the visual sensing data by analyzing the visual sensing data; and if the radar confidence level and the visual confidence level both are greater than a preset value, obtaining, by the processor, a position and a speed of the at least one object by analyzing the visual sensing data and the radar sensing data.

In an embodiment of the invention, a computer-readable medium is provided. The non-transitory computer-readable medium storing instructions that is executable by at least one processor of a traffic warning system to cause the system to perform a method for: detecting a visual sensing data of each of at least one object; detecting a radar sensing data of each of the at least one object; obtaining a radar confidence level of the radar sensing data by analyzing the radar sensing data; obtaining a visual confidence level of the visual sensing data by analyzing the visual sensing data; and if the radar confidence level and the visual confidence level both are greater than a preset value, obtaining a position and a speed of the at least one object by analyzing the visual sensing data and the radar sensing data.

Numerous objects, features and advantages of the invention will be readily apparent upon a reading of the following detailed description of embodiments of the invention when taken in conjunction with the accompanying drawings. However, the various embodiments and drawings employed herein are for the purpose of exemplary descriptions and should not be regarded as limiting.

### BRIEF DESCRIPTION OF THE DRAWINGS

The above objects and advantages of the invention will become more readily apparent to those ordinarily skilled in the art after reviewing the following detailed description and accompanying drawings, in which:
FIG. 1 illustrates a schematic diagram of a function block of a traffic warning system according to an embodiment of the invention;
FIGS. 2A and 2B illustrate a flow chart of the operation method of the traffic warning system in FIG. 1;
FIG. 3 illustrates a schematic diagram of the object recognition for different traffic lanes by vision based algorithm in the present disclosure;
FIG. 4 illustrates a schematic diagram of a relative relationship of a relative speed (axis of abscissa) of the object relative to the traffic warning system and a corresponding stopping distance (axis of ordinate);
FIG. 5 illustrates a schematic diagram of the collision zone and the threat zones in an embodiment; and
FIG. 6 illustrates a schematic diagram of a relative relationship of a relative speed (axis of abscissa) of the object relative to the traffic warning system and a corresponding stopping distance (axis of ordinate) according to another embodiment.

### DETAILED DESCRIPTION OF PREFERRED EMBODIMENTS

This present disclosure provide a traffic warning system a computer-readable medium using the same and an operation method thereof, which may integrate two types of sensors, for example, "radar or microwave sensor" and "visual sensor", taking advantage of both and significantly reducing the power consumption required for system operation through implementable operating methods and control logic, especially it can be applied to various mobile light transportation vehicles (such as bicycles, e-bikes, or other multiple-wheeled personal mobility solutions etc.) to timely output warning for assisting a rider to improve riding safety and avoid potential hazard caused by approaching vehicle from behind or avoid threat in the rider's blind spot. Such emergency detection result can be detected through the system information that should be reflected first can be provided to the rider in a timely manner, and accordingly it can achieve beneficial effects such as power saving, low interference, and accurate warnings.

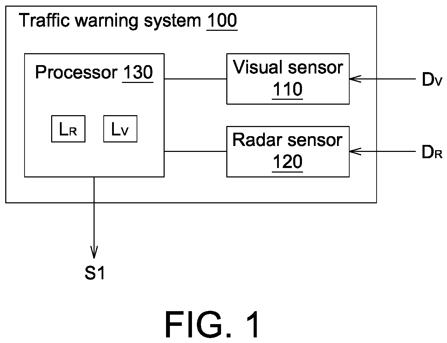

Referring to FIG. 1, FIG. 1 illustrates a schematic diagram of a function block of a traffic warning system 100 according to an embodiment of the invention. The traffic warning system 100 may be disposed on a vehicle (such as bicycles, e-bikes, or other multiple-wheeled personal mobility solutions etc.).

As illustrated in FIG. 1, the traffic warning system 100 includes a visual sensor 110, a radar sensor 120 and a processor 130. The visual sensor 110 is configured to detect a visual sensing data Dv of each of at least one object 10. The radar sensor 120 is configured to detect a radar sensing data D_{R} of each of the at least one object 10. The processor 130 is configured to obtain a radar confidence level L_{R} of the radar sensing data by analyzing the radar sensing data D_{R}; obtain a visual confidence level Lv of the visual sensing data Dv by analyzing the visual sensing data Dv; and if the radar confidence level L_{R} and the visual confidence level Lv both are greater than a preset value, obtain a position of the object 10 and a speed of the object 10 by analyzing the visual sensing data Dv and the radar sensing data D_{R}. In an embodiment, the visual sensor 110 and the radar sensor 120 together may increase the accuracy of object detection.

The "visual sensor" herein may be implemented by an image capturing device, for example, a camera (such as, a GoPro camera mounted on a helmet, a wide-angle camera, an infrared camera, etc.), etc. In addition, the traffic warning system 100 (for example, the vision sensor 110 or the processor 130) may recognize the object 10 by using an AI (artificial intelligence) model. The AI model may be obtained in advance by various suitable machine learning techniques, for example, deep learning, etc. The object 10 is, for example, an obstacle, a vehicle, a pedestrian, etc. The visual sensor 110 possesses properties: (1). close and near sensing range, decreasing blind spots within the Field of View (abbr., FOV) area with a length of 30m and a wide of 144°; and (2). Vision detection is able to detect multiple targets (for example, greater than 10 target objects) simultaneously.

The radar sensor 120 is, for example, 24G Radar, which has the lowest power consumption, and could be choose from different specifications with or without Lane Recognition Capability. In general, the power consumption of vision sensor, for example, 10W (watt), is much higher than power consumption of radar sensor caused limitations of applicability. In the present embodiment, the traffic warning system may integrate the radar sensor and the vision sensor, and minimize power consumption and further improve the so called 'Smart' features (i.e., Lane Recognition Capability with adaptively power saving schemes or mechanisms). The radar (or microwave) sensor possesses property: far and long sensing range, further extending the coverage beyond a vision area with a length of at least 100 meters (m) and a width of 8m by using, for example, 24 GHz millimeter-wave.

The processor 130 may be electrically connected with the visual sensor 110 and the radar sensor 120 and configured to control the sensors to turn on and turn off depending on different traffic scenarios or environmental conditions, and process the data sensed or generated by the sensors. The processor 130 may control the visual sensor 110 and the radar sensor 120 to perform an operation method of the traffic warning system 100. The processor 130 may obtain the position and the size (of the object frame) of the object 10 according to the visual sensing data Dv, and obtain the position and the speed of the object 10 according to the radar sensing data D_{R}.

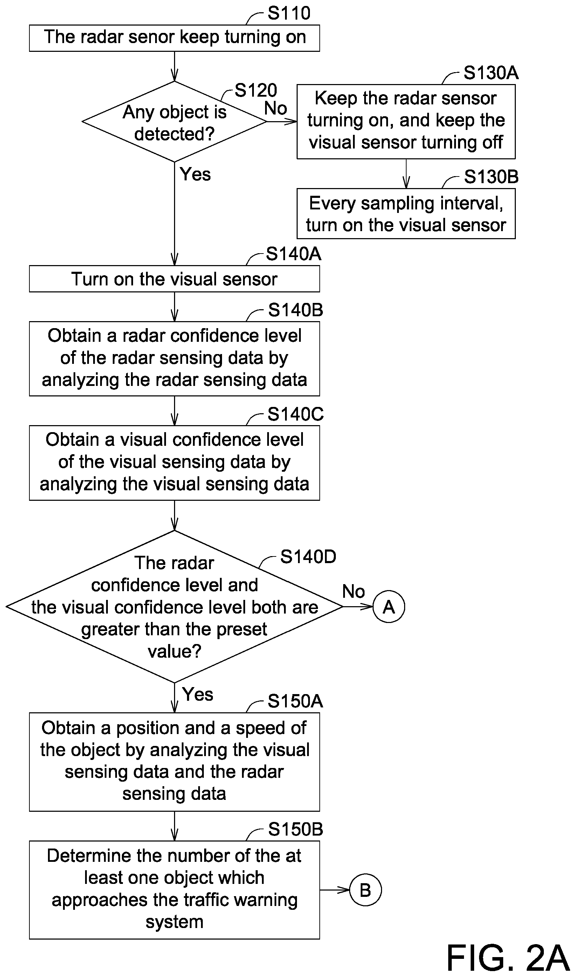

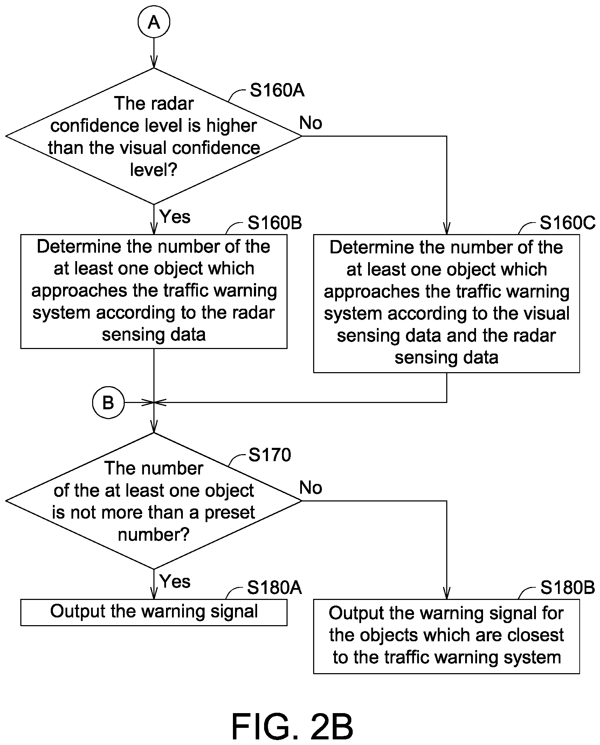

Referring to FIGS. 2A and 2B, FIGS. 2A and 2B illustrate a successive flow chart corresponding to different situations of the operation method of the traffic warning system 100 in FIG. 1.

In step S110, the radar sensor 120 keeps turning on. Furthermore, if there is no object detected in a detection period, the radar sensor 120 may keep turning on, and the visual sensor 110 may keep turning off for power saving.

In step S120, the radar sensor 120 may detect whether any object 10 appears around the traffic warning system 100. If there is no any object 10 around the traffic warning system 100, the process proceeds to step S130A. If there is any object 10 around the traffic warning system 100, the process proceeds to step S140A.

In step S130A, the radar sensor 120 keeps turning on, and the visual sensor 110 keeps turning off for power saving.

In step S130B, in every sampling interval (for example, 2 seconds to 5 seconds), the visual sensor 110 is turned on for detecting whether any object 10 appears around the traffic warning system 100. In an embodiment, the visual sensor 110 may be turned on for an enabling period (for example, 2 seconds to 5 seconds) every the sampling interval. In an embodiment, the enabling period may be less than, greater than or equal to the sampling interval.

In step S140A, if any object is detected, the visual sensor 110 is turned on for increasing or improving the confidence of the detection result. The visual sensor 110 may detect the visual sensing data Dv of each of at least one object 10.

In steps S140B and S140C, the processor 130 performs a fusion procedure. In the fusion procedure, the processor 130 may obtain the radar confidence level L_{R} of the radar sensing data D_{R} by analyzing the radar sensing data D_{R} (for example, based on reflected signal strength, time-of-flight, etc.) and obtain the visual confidence level Lv of the visual sensing data Dv by analyzing the visual sensing data Dv (for example, based on captured images and image processing results, etc.). In an embodiment, the radar confidence level L_{R} may be obtained by using, for example, millimeter wave radar, and the visual confidence level Lv may be obtained by using, for example, a CMOS (Complementary Metal-Oxide-Semiconductor) sensor camera, a QVGA (Quarter Video Graphics Array) sensor camera and/or an infrared sensor camera etc.

In an embodiment, it may be only one of the radar sensor and the vision sensor can work and provide higher confidence detected information in some special cases. In the first case, the visual detection accuracy decreases dramatically in poor weather condition and/or night circumstance, and thus only radar sensor can detect the vehicle and improve the bad condition further. In the second case, when the coming objects are beyond the detectable areas of radar sensor, the vision sensor can detect the vehicle located within radar's blind spot and improve the missing condition further. Therefore, the mentioned two kinds of sensors can be operated adaptively depending on different situations.

In step S140D, the processor 130 determines whether the radar confidence level L_{R} and the visual confidence level Lv both are greater than the preset value. If the radar confidence level L_{R} and the visual confidence level Lv both are greater than the preset value, the process proceeds to step S150A. If the radar confidence level L_{R} and the visual confidence level Lv are not greater than the preset value, the process proceeds to step S160. In an embodiment, the preset value may range between, for example, 70% and 90% (for example, 80%), even less or greater. The preset value may be an indicative value or a percentage to reflect the quality or reliability of data.

In step S150A, the processor 130 may obtain the position (for example, relative position) and the speed (for example, relative speed) of the object 10 by analyzing the visual sensing data Dv and the radar sensing data D_{R}.

In step S150B, the processor 130 may determine the number of the at least one object 10 which approaches (for example, the relative position and the relative speed of the object 10 is positive) the traffic warning system 100.

In step S160A, the processor 130 may determine whether the radar confidence level L_{R} is higher than the visual confidence level Lv. If the radar confidence level L_{R} is higher than the visual confidence level Lv, the process proceeds to step S160B. If the radar confidence level L_{R} is not higher than the visual confidence level Lv (for example, the visual confidence level L_{V} is higher than the radar confidence level L_{R}), the process proceeds to step S160C.

In step S160B, the processor 130 determines the number of the object 10 which approaches the traffic warning system according to the radar sensing data D_{R} (for example, the position and the speed).

In step S160C, the processor 130 determines the number of the object 10 which approaches the traffic warning system according to the visual sensing data Dv (for example, the position) and the radar sensing data D_{R} (for example, the speed or an estimation results of the speed).

In step S170, the processor 130 determines whether the number of the object 10 is not more than a preset number. If the number of the object 10 is not more than the preset number, the process proceeds to step S180A. If the number of the object 10 is more than the preset number, the process proceeds to step S180B. In an embodiment, the preset number is, for example, five, or even less or more.

In step S180A, the processor 130 outputs a warning signal S1. The warning signal S1 is, for example, sound, vibration, image, light, etc.

In step S180B, the processor 130 outputs the warning signal S1 for the object 10 which is closest to the traffic warning system 100. For example, when the distance between the object 10 closest to the traffic warning system 100 and the traffic warning system 100 is equal to or less than a preset distance, the processor 130 outputs the warning signal S1.

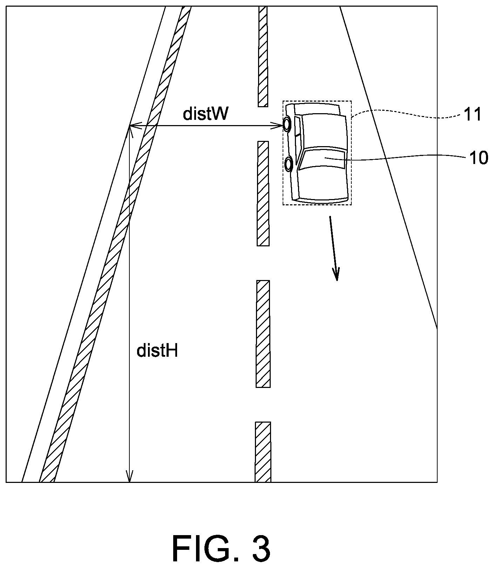

Referring to FIG. 3, FIG. 3 illustrates a schematic diagram of the object recognition for different traffic lanes by vision based algorithm in the present disclosure.

Firstly, the processor 130 may obtain the object frame 11 (or vehicle identification frame) information according to the size of coming object. Then, the processor 130 may calculate size pixels based on different types of objects. Then, the processor 130 may calculate the object position (for example, the object position may be represented by distance distH and/or distance distW) relative to the rider according the calculated size pixels, and the value of the object position of the object 10 may be a reference number for different types of vehicles. The distance distW is the distance between the object 10 and an edge of the lane, and the distance distH is the distance between the traffic warning system 100 and the object 10. Then, the value of distW is configured to determine whether detected vehicle is at same lane as the rider. For example, if distW is less than 2 m, the processor 130 of the traffic warning system 100 determines that the coming object is highly probably located at same lane as they are back the riders. If distW is not less than 2 m, the processor 130 determines that the coming object would be at different lanes.

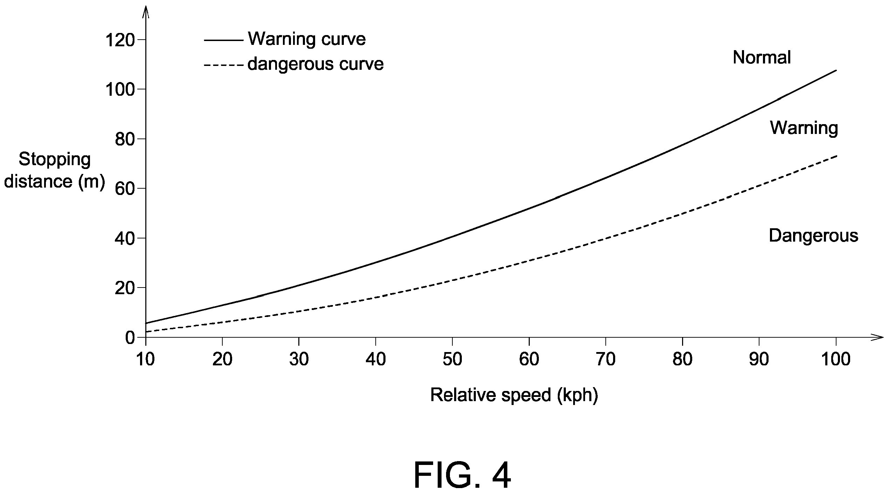

Referring to FIG. 4, FIG. 4 illustrates a schematic diagram of a relative relationship of a relative speed (axis of abscissa) of the object 10 relative to the traffic warning system 100 and a stopping distance (axis of ordinate) corresponding to a specific relative speed. The stopping distance is the required or estimated distance with regard to different relative speeds for an approaching vehicle to come to a complete stop from a moving condition when nearing a rider's vehicle equipped with the traffic warning system 100.

As illustrated in FIG. 4, compared with warning mode, for the same relative speed, the stopping distance of dangerous mode is shorter than that of warning mode. Compared with normal mode, for the same relative speed, the stopping distance of warning mode is shorter than that of normal mode. Based on the above observation, it means that the dangerous mode is more urgent than the warning mode, and therefore if any detected conditions achieve or over the level of dangerous mode should have highest priority to alert the riders.

When a coming object is from back of riders, the object 10 would be recognized as located in a collision zone and the rider will be informed either a warning or a dangerous message depending on how long the reaction time left. Furthermore, the rider will be informed by the warning mode while potential risky objects are located in threat zones. The collision zone and threat zones here are merely for explanatory or exemplary examples.

As illustrated in FIGS. 2A, 2B and 4, when the number of the vehicle is not more than the preset number (for example, 5), the process proceeds to step 180A. When the number of the vehicle is more than the preset number, the process proceeds to step 180B. In step 180A, the processor may output a warning signal according to the set forth different modes (i.e., normal mode, warning mode and/or dangerous mode). In step 180B, the processor may detect the top "preset number" dangerous vehicles (for example, the top 5 dangerous vehicles), and output the warning signal S1 by different modes accordingly. The dangerous vehicle refers to the vehicle which is very close (or continuously near) to the traffic warning system 100 and probably may collide in a very short period of time.

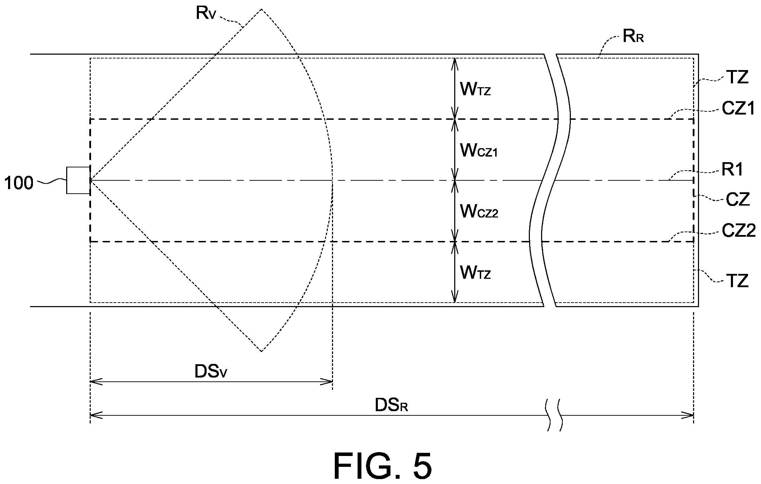

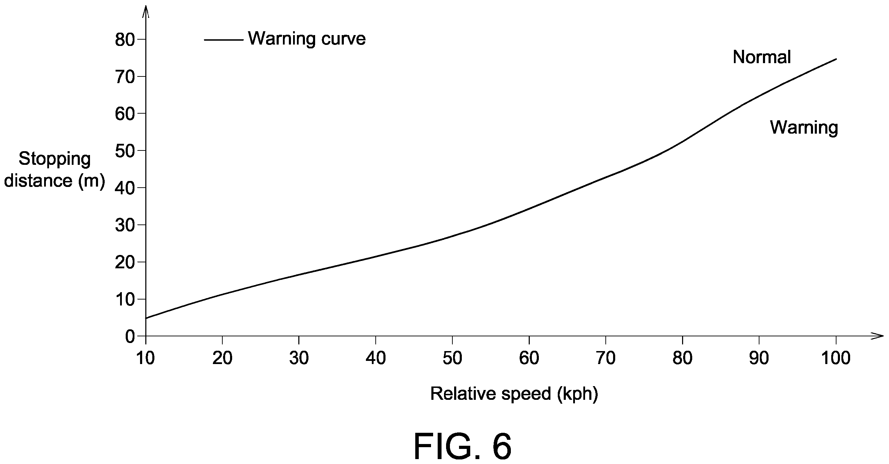

Referring to FIGS. 5 and 6, FIG. 5 illustrates a schematic diagram of the collision zone CZ and the threat zones TZ in an embodiment, and FIG. 6 illustrates a schematic diagram of a relative relationship of a relative speed (axis of abscissa) of the object 10 relative to the traffic warning system 100 and a corresponding stopping distance (axis of ordinate) according to another embodiment.

As illustrated in FIG. 5, the zone within which the traffic warning system 100 is located is defined as the collision zone CZ. A reference line R1 passing through the traffic warning system 100, and the collision zone CZ has a first collision boundary CZ1 and a second collision boundary CZ2, wherein a first collision width W_{CZ1} is defined between the reference line R1 and the first collision boundary CZ1, and a second collision width W_{CZ2} is defined between the reference line R1 and the second collision boundary CZ2. In an embodiment, the first collision width W_{CZ1} may range between, for example, 1 meter and 3 meters (for example, 2 meters), and the second collision width W_{CZ2} may range between, for example, 1 meter and 3 meters (for example, 2 meters). The first collision width W_{CZ1} and the second collision width W_{CZ2} may be equal or different. When the approaching object is recognized as located in the collision zone CZ and the mode may be determined by the processor 130 by using the relative relationship as illustrated in FIG. 4.

As illustrated in FIG. 5, the threat zones TZ are located outside the collision zone CZ. Furthermore, the threat zones TZ are connected and adjacent to the first collision boundary CZ1 and the second collision boundary CZ2, respectively. The threat zone TZ has a threat width W_{TZ}, and the threat width W_{TZ} may range between, for example, 1 meter and 3 meters (for example, 2 meters). When the approaching object is recognized as located in the threat zone TZ (outside the collision zone CZ), the mode may be determined by the processor 130 by using the relative relationship as illustrated in FIG. 6. Furthermore, it is more urgent when an approaching vehicle is located within the collision zone CZ. The traffic warning system 100 can be operated appropriately based on various traffic conditions and different modes, and adaptively output a warning signal accordingly.

As illustrated in FIG. 5, compared to a radar sensing region R_{R} of the radar sensor 120, a visual sensing range Rv of the visual sensor 110 has a wider sensing angle to decrease and eliminate blind areas near the traffic warning system 100. Compared to the visual sensing range Rv of the visual sensor 110, the radar sensing region R_{R} of the radar sensor 120 has a longer sensing length to increase the detectable area far from traffic warning system 100. Furthermore, in an embodiment, the radar sensing region R_{R} of the radar sensor 120 has a radar sensing length DS_{R} longer than a visual sensing length DSv of the visual sensor 110. In an embodiment, the radar sensing length DS_{R} may range between, for example, 90 meters and 110 meters (for example, 100 meters), and the visual sensing length DSv may range between, for example, 20 meters and 40 meters (for example, 30 meters).

As show in Table 1 below, it shows a schematic diagram of a plurality of modes in different embodiments of the present disclosure. In mode 1, the radar sensor is always powered on (or keeps powering on) while the vision sensor is periodically powered on (for example, step S130B in FIG. 2A), and accordingly it may reduce power consumption. In mode 2, when the radar sensor detects high-speed-coming object, the vision sensor is immediately powered on by the potential risky event (for example, step S140A in FIG. 2A). In mode 3, the radar sensor is always powered on while the vision sensor is powered off in bad weather (for example, heavy rain or fog) or the vision sensor is powered off when the visual confidence level Lv is frequently lower than a value ranging between 50% and 80%. In mode 4, when the object back of the rider stops for more than few seconds (for example, 2 seconds to 5 seconds, etc.), the radar sensor is temporarily or periodically powered off and the vision sensor is powered off.

**Table 1**

| | radar sensor | visual sensor |
|---|---|---|
| Mode 1 | Always power on | Periodically power on (for example, every 2s, 5s, etc.) |
| Mode 2 | High-speed-coming objects are detected | Power on immediately by potential risk events |
| Mode 3 | Always power on | Power off in bad weather (for example, heavy rain or fog) or when the visual confidence level is frequently lower than 50% |
| Mode 4 | Temporarily or periodically power off when the object back of the rider stopped more than few seconds (for example, 2s to 5s, etc.) | Power off |

The disclosure of the traffic warning system, the computer-readable medium storing executable instructions process by at least one processor of the traffic warning system to execute relative algorithm or method herein are some exemplary embodiments at least include the features below:
1. In order to take advantage of both the radar and the visual sensing technologies, adaptively turns on and turns off one of them in a timely manner based on a low power consumption condition, pre-process the echo signal from the radar and the image data from the vision separately, and map object position information detected by different sensors by using the data gridding, and perform data fusion on the measured or estimated data (such as vehicle speed (moving speed or relative speed) or braking reaction time, object size, etc.) with the quality (reliability) of the data, or perform the dynamic prediction on the coming vehicle based on data with higher reliability.
2. Determination of the reliability of sensing data: consider the data fusion process of the radar confidence level L_{R}, the visual confidence level Lv in different scenarios of the present disclosure, and the processing when the visual confidence level Lv and the radar confidence level L_{R} are both too low.
3. When too many dynamic objects are detected (for example, the number of coming vehicles is greater than 5, 10 or more), in order to be able to take into account low power consumption and improved computing efficiency, it can be considered to prioritize the identification of the top five (or other value) potential threatening vehicles (but are not limited to vehicle types (for example, bicycle, motorcycle, car, truck, van, etc.)). For example, the threat level of coming vehicles may be determined according to the relationship of the relative vehicle speed and the braking response time/distance.
4. The location of the objects can be distinguished by different lanes, relative distance (far, near, etc.), and can be displayed (or shown) in the human-machine interface, and the human-machine interface may provide warning information adaptively under different circumstances.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A traffic warning system (100), wherein the traffic warning system (100) comprises:
a visual sensor (110) configured to detect a visual sensing data (Dv) of each of at least one object (10);
a radar sensor (120) configured to detect a radar sensing data (D_{R}) of each of the at least one object (10);
a processor (130) electrically connected to the visual sensor (110) and the radar sensor (120) and configured to:
obtain a radar confidence level (L_{R}) of the radar sensing data (D_{R}) by analyzing the radar sensing data (D_{R});
obtain a visual confidence level (Lv) of the visual sensing data (Dv) by analyzing the visual sensing data (Dv); and
if the radar confidence level (L_{R}) and the visual confidence level (Lv) both are greater than a preset value, obtain a position and a speed of the at least one object (10) by analyzing the visual sensing data (Dv) and the radar sensing data (D_{R}).

2. The traffic warning system (100) as claimed in claim 1, wherein the preset value ranges between 70 % and 90 %.

3. The traffic warning system (100) as claimed in any of claims 1 to 2, wherein the processor (130) is configured to:
if the radar confidence level (L_{R}) and the visual confidence level (Lv) both are greater than the preset value, determine the number of the at least one object (10) which approaches the traffic warning system (100).

4. The traffic warning system (100) as claimed in claim 3, wherein the processor (130) is configured to:
if the number of the at least one object (10) is not more than a preset number, output a warning signal (S1).

5. The traffic warning system (100) as claimed in claim 3, wherein the processor (130) is configured to:
if the number of the at least one object (10) is more than a preset number, output a warning signal (S1) for the object (10) which is closest to the traffic warning system (100).

6. The traffic warning system (100) as claimed in any of claims 1 to 5, wherein the processor (130) is configured to:
if the radar confidence level (L_{R}) and the visual confidence level (Lv) are not greater than the preset value and the radar confidence level (L_{R}) is higher than the visual confidence level (Lv), determine the number of the at least one object (10) which approaches the traffic warning system (100) according to the radar sensing data (D_{R}).

7. The traffic warning system (100) as claimed in claim 6, wherein the processor (130) is configured to:
if the number of the at least one object (10) is not more than a preset number, output a warning signal (S1).

8. The traffic warning system (100) as claimed in claim 6, wherein the processor (130) is configured to:
if the number of the at least one object (10) is more than a preset number, output a warning signal (S1) for the object (10) which is closest to the traffic warning system (100).

9. The traffic warning system (100) as claimed in any of claims 1 to 8, wherein the processor (130) is configured to:
if the radar confidence level (L_{R}) and the visual confidence level (Lv) are not greater than the preset value and the visual confidence level (Lv) is higher than the radar confidence level (L_{R}), determine the number of the at least one object (10) which approaches the traffic warning system (100) according to the visual sensing data (Dv) and the radar sensing data (D_{R}).

10. The traffic warning system (100) as claimed in claim 9, wherein the processor (130) is configured to:
if the number of the at least one object (10) is not more than a preset number, output a warning signal (S1).

11. The traffic warning system (100) as claimed in claim 9, wherein the processor (130) is configured to:
if the number of the at least one object (10) is more than a preset number, output a warning signal (S1) for the object (10) which is closest to the traffic warning system (100).

12. The traffic warning system (100) as claimed in any of claims 1 to 11, wherein the processor (130) is configured to:
determine whether there is the at least one object (10) is detected; and
if there is no any object (10) is detected, keep the radar sensor (120) turning on, and keep the visual sensor (110) turning off.

13. The traffic warning system (100) as claimed in any of claims 1 to 12, wherein the processor (130) is configured to:
determine whether there is the at least one object (10) is detected;
If the at least one object (10) is detected by the radar sensor (120), turn on the visual sensor (110).

14. The traffic warning system (100) as claimed in any of claims 1 to 13, wherein the processor (130) is configured to:
periodically turn on the visual sensor (110).
